# EUROPEAN PATENT SPECIFICATION

(11) **EP 0 637 004 B1**
(45) Date of publication and mention of the grant of the patent: **17.09.1997**
(21) Application number: 94110728.6
(22) Date of filing: 11.07.1994
(51) Int. Cl.: G07F 9/02, G07F 7/02

(54) **Method for recording usage data of card operated devices**
Verfahren zur Aufzeichnung von Gebrauchsdaten von kartenbetätigten Vorrichtungen
Méthode pour l'enregistrement de données d'utilisation de dispositifs actionnés par carte

(30) Priority: 20.07.1993 NL 9301271
(43) Date of publication of application: 01.02.1995
(60) Divisional application: 97200502.9
(73) Proprietor: Koninklijke PTT Nederland N.V., 2509 CH Den Haag (NL)
(72) Inventor: van de Pavert, Hendricus Johannes Wilhelmus Maria, NL-2727 BV Zoetermeer (NL)

(56) References cited:
- EP-A- 0 185 365
- EP-A- 0 223 213
- DE-A- 3 543 067
- DE-A- 4 103 415
- GB-A- 2 172 720
- US-A- 4 529 870
- NTZ NACHRICHTENTECHNISCHE ZEITSCHRIFT, vol. 39, no.11, 1986, BERLIN, DE, pages 754-759; WOLFGANG HEBERLE ET.AL.: 'Öffentliches Kartentelefon für Wert- und Kreditkarten'
- SIGNAL + DRAHT, vol. 85, no.3, March 1993, DARMSTADT, DE, pages 61-64; WERNER STAMMINGER: 'ÖKOM-DB - das Abrechnungssystem für Kartentelefone des DB.'
- L'Echo des RECHERCHES, N 134, 1988, pp 15-24, "Le paiement électronique", P. Rémery, J.-C. Pailles, F. Lay

## Description

### BACKGROUND OF THE INVENTION

The invention relates to a method for recording usage data of a card operated device, the method comprising storing the usage data in a storage unit associated with the device. More in particular, the invention relates to the secure storage of cost data in counters of public telephone sets of the type where the caller pays by means of a card, such as a so-called chip card. The invention also relates to recording usage data in general and cost data in particular of (vending) machines where the purchaser pays by means of a card, such as vending machines for sweets or for soft drinks, certain types of parking meters and stamp vending machines. The term "card" should in this context be taken as referring to any type of card (or equivalent of a card) which enables the user to make use of the device in question.

It is known in practice to equip telephone sets for public use with a payment mechanism which settles payment by means of a card (phone card) such as a magnetic card or a chip card. On the card, a balance is stored in a magnetic strip or in a semiconductor memory. With each telephone conversation, the balance stored on the card is lowered, for example with each metering pulse (billing pulse) of the telephone network or of the telephone set in question. Adjustment of the balance takes place, for a card having a semiconductor memory, by continually supplying to the card a pulse which causes a reduction of the balance, for example by subtracting an amount from a stored value or by lowering a counter content of an electronic counter.

The number of telephone calls, the number of metering pulses and/or the amount of call charges can be recorded not only in the card, but also by a counter (or a different-type storage unit) associated with the telephone set. It is possible for such a counter to be present in the telephone set itself, but also to be accommodated in a separate counting or recording device which is common to a number of telephone sets but linked to the telephone sets in question. Incidentally, a count of the charges is also kept in the telephone exchange to which the telephone set in question is connected, but generally for other purposes. A counter, associated with a telephone set, of the type mentioned in the above may be used, for example, for statistical purposes or for checking card balances, but can also be used for settling call charges.

Such settling of charges may be carried out for various reasons. Firstly, it may involve a settling of charges with the commercial operator of the locality in which the telephone set in question is located, the commercial operator being paid part of the call charges. Thus it is, for example, standard practice in hotels and restaurants to impose a surcharge for the use of the public telephone set present there. Secondly, a settling of charges may be necessary with another telephone company if the caller makes use of a card of a telephone company different from that to which the telephone in question is connected. The main instance of this type to come to mind is the use of foreign cards, where it is necessary to settle the call charges with the foreign telephone company in question. Thirdly, a settlement of charges can be carried out with the commercial operator of the telephone set itself.

In the case of vending machines and the like, charges may be settled correspondingly with, for example, the commercial operator of the locality where the machine is placed, the agency which has supplied the card, and the commercial operator of the machine. An example of a card operated vending machine is described in DE-A-4.103.415 [3]. The vending machine proposed in [3] is provided with an additional card for recording operator revenues.

Card operated devices are, however, subject to possible fraud, especially fraud by mechanical and/or electronic manipulation of the card or the device. It is found that telephone sets and vending machines are broken into with the possibility of the counter contents being altered. There are also incidences of card balances being increased illegally. Consequently, reliable and fair settling of charges is obviously no longer possible. In the abovementioned cases of the use of a public telephone in a particular commercially operated locality and the use of a foreign card this always results in loss of income for the telephone company in question.

In conventional public telephone sets (payphones) each metering pulse or all the call charges are transmitted to the counter of the telephone set itself and to the card which has been inserted into the telephone set. The objective of this is to adjust continually, i.e. at each metering pulse, both the count state of the counter of the telephone set and the balance of the card, thus making possible a subsequent check of the balance of the card (and possible other usage data stored therein). By means of suitable manipulations with the telephone set it may become possible for the card to be able to be removed during the telephone call, so that the call charges are no longer debited to the card. Although security procedures have been proposed which continually check the presence of the card, it is nevertheless not possible to guarantee that the charges recorded in the telephone set and further data keep in step at all times with the data stored in the card. After all, it is still possible for metering pulses (or, in the case of a card equipped with a microprocessor, suitable instructions) indeed to be transmitted to the card with the objective of lowering the balance on the card, but for these metering pulses not to reach the card owing to, for example, a technical fault or manipulation.

European patent application EP-A-0.185.365 [4] discloses card operated pay phones connected to a central computer, the computer providing data for verifying the authenticity of the card. The credit balance is written in the card at the end of a telephone call, but there is no guarantee that the actual balance written is correct.

The publication "Öffentliches Kartentelefon für Wert- und Kreditkarten" [5] discloses card phones in which the identity of the card is checked. An "image" of a card is made and during a phone call the recording of data is checked by repeatedly comparing this image with metering pulses received from an exchange. The identity of the image with the actual card can, however, not be guaranteed.

US 4 529 870 [6] discloses a system for electronic transactions. The system comprises a card-shaped device having a keyboard, a display, a memory and encrypting means. Payments are effected by means of electronic cheques, which allow an external system to receive payment from a financial institution maintaining the account to be debited. In order to pay using electronic cheques, the external system provides, via a terminal ("interface unit"), the card-shaped device an amount to be paid. In the card-shaped device, the amount to be paid is shown on the display. On approval by the user, the card-shaped device produces an electronic signature which is subsequently transferred to the terminal. The amount debited to the card-shaped device is thus guaranteed by the integrity of the electronic cheques. The system disclosed is, given the complexity of electronic cheques, less suitable for e.g. public telephone sets. Also, in public telephone sets or vending machines personalised payments, comprising the identity of the payer, are normally not required.

EP A 0 223 213 [7] discloses a system in which used fee units are stored in a counter on a card. This card is used to charge phone calls from public phones to a home phone number. At random intervals, unknown to the owner, the current amount of the counter is checked by a central evaluation location. There is no guarantee that the correct number of fee units is stored on the card. Furthermore, this publication does not deal with pre-paid cards.

### SUMMARY OF THE INVENTION

An effective check of the usage data stored on the card, in particular of the balance stored on that card, can only be achieved if it is known with certainty which usage data are stored on the card. The object of the invention is therefore to overcome the abovementioned and other drawbacks of the prior art and to provide for reliable recording of usage data, in particular charge data, of card operated devices. To this end there is provided a method as set out in claim 1. Optional features are set out in the remaining claims.

In other words, according to the invention, the usage data are not supplied directly from the device (e.g. a telephone set) to the storage unit, but first transferred to the card in order to then, i.e. immediately thereafter or some time later, be conveyed from the card to the device and, after possible processing, to be stored in the storage unit. As a result, the storage unit stores usage data which are related with certainty to the usage data recorded on the card, so that a reliable check of the usage data and thus reliable settling of the call charges is made possible. It is possible, for example, for an absolute value such as a credit recorded on the card to be transmitted from the card to the device, while in the storage unit a relative value is stored, such as the difference between this credit and a previous credit.

It will be understood that using a cryptographic technique in the method according to the invention is optional.

Advantageously, the method according to the invention is carried out in such a way that the transmission of a card balance from the card to the storage unit takes place during a verification procedure by means of which the authenticity of the card is verified. A substantial advantage of this is that at the same time the reliability of the usage data is checked: if the authenticity of the card cannot be demonstrated, the usage data transmitted are unreliable and may be ignored. It is advantageous, in that case, to record, and subsequently process the fact that the usage data of the card in question are unreliable, so that the card may, for example, be rendered invalid. If the usage data are involved in the verification procedure itself, by, for example, an authenticity code being generated on the basis of, inter alia, the usage data, a single data transmission from card to device may serve two purposes, viz. the verification of the authenticity and the verification of the usage data. Preferably, the verification procedure for each usage (telephone call, act of purchase) of a device takes place repeatedly. Thus it is achieved that a transmission of usage data and thus a check or verification of these usage data is enabled a number of times during the usage in question of the device. Consequently, current data are stored and checked at all times. By repeating the verification process and thus the transmission of the call data more frequently per unit of time, the reliability of the stored data is increased, while the disadvantageous effects of a premature removal of the card, i.e. a removal before usage has finished, are reduced.

The method according to the invention is preferably carried out in such a way that the verification procedure comprises the determination of an authenticity code, which determination takes place on the basis of, inter alia, the usage data. This achieves additional security of the usage data.

Advantageously, the usage data may comprise a credit balance. In the case of a telephone set, the credit balance will be the call charge credit. It is possible, by means of the method according to the invention, to guarantee that, for example, the amount debited from the card is represented correctly in (the storage unit of) the device.

The costs of a particular transaction, the number of times that a particular card or a particular device is used (the number of transactions) and usage data of this type are advantageously stored by means of at least one counter. When charges which are deducted on the card from a balance are stored, the counter may be increased by the number of units by which the balance of the card is lowered. It is also possible to lower the counter by the number of units by which the balance of the card is lowered.

It is possible, for checking the usage data, to always use the difference of two balances or other usage data (counter contents) stored at different times. After reading out a counter or a memory location of the storage unit, the data stored therein can be erased, so that the counter or memory location in question again returns to the start position (zero state). It may however be advantageous to make use of absolute counters which cannot be reset. This provides security against loss of data if read-out data have been lost, for example owing to a malfunction.

A further security against loss in the case of malfunctions can be obtained if the storage unit, in addition to the current absolute value of a counter, also stores the absolute value of that counter during the most recent read-out thereof. Preferably, the process of reading out from the storage unit, i.e. the transmission of the values (usage data) stored in the storage unit to a downstream system, comprises forming the difference of the said values of the counter i.e. the difference of the current absolute counter value and the absolute value of that counter during the most recent read-out thereof. Thus it is possible at all times to read out a relative value, namely the difference between two counter contents, from the storage unit, while the detrimental effect of data loss during read out is considerably reduced. Further security of the usage data is obtained if the process of reading out from the storage unit comprises forming a cryptogram from usage data read out. In other words, during read-out the stored usage data are converted cryptographically into a code to be transmitted to a downstream system. This code (cryptogram) need not be decodable; in the downstream system (telephone exchange, central recording system) a similar code can be generated which, for the purpose of verification of the coded usage data, is tested for identity with the received code.

The storage unit which, as discussed in the above, may comprise one or more counters is preferably accommodated in a secure module which is accommodated preferably detachably, in the telephone set in question. The module which preferably is designed so as to be robust in order to prevent manipulations, and which is provided with a suitable connector to form an electrical and mechanical connection with the device in question has advantageously accommodated therein an enciphering device and a random-number generator for the purpose of the verification procedure. This has the advantage that the process of enciphering cannot be influenced from outside. Enciphering can be used both in order to transmit the usage data (balances) in a secure manner, for example from the storage unit to a central processing device, and for forming, on the basis of certain data stored in the card, an authenticity code which can be used in said verification procedure.

Advantageously, a device in which the method according to the invention is used, is suitable for inputting security codes for retrieving secure information or inputting secret access numbers. Since many users find it difficult to remember different security codes (such as PIN codes), a suitable card is advantageously provided with a semiconductor memory for storing security codes, which memory is only accessible by inputting, via a device, a further security code. Thus it is possible, by inputting only a single security code, to retrieve a number of other codes and, for example, make them visible on a display unit of the device in question. In so doing, use is made of the fact that devices of the type discussed in the above are generally equipped with a display unit for displaying amounts to be paid, instructions for the user, numbers dialled (in the case of telephone sets), etc.. In combination with a suitable card which may for example but not necessarily, be a card for making payments, the reproduction of secret or other stored data such as security codes (PIN codes, Personal Identification Number Codes) is possible. The data thus reproduced may for example, in turn be input into the device in question for a further action (dialling a secret telephone number, obtaining a certain access privilege, enquiring for the balance of a particular bank account). Advantageously, a card of this type can be used for retrieving usage data from secure storage units of devices.

### REFERENCES

[1] H. Baker & F. Piper, "Cipher Systems", London, 1982.
[2] P. Horowitz & W. Hill, "The Art of Electronics", Cambridge, 1989.
[3] DE-A-4.103.415
[4] EP-A-0.185.365
[5] W. Heberle & D. Lohner: "Öffentliches Kartentelefon für Wert- und Kreditkarten" (Public Card Telephone for Debit and Credit Cards), NTZ Nachrichtentechnische Zeitschrift, Vol. 39, no. 11, Berlin 1986.

### BRIEF DESCRIPTION OF THE DRAWING

The invention will further be explained below with reference to the drawing, in which:

Figure 1 shows schematically the data exchange between a card, a device and a security module of the device.

Figure 2 shows an embodiment of a system in which the invention has been implemented.

### DETAILED DESCRIPTION OF A PREFERRED EMBODIMENT

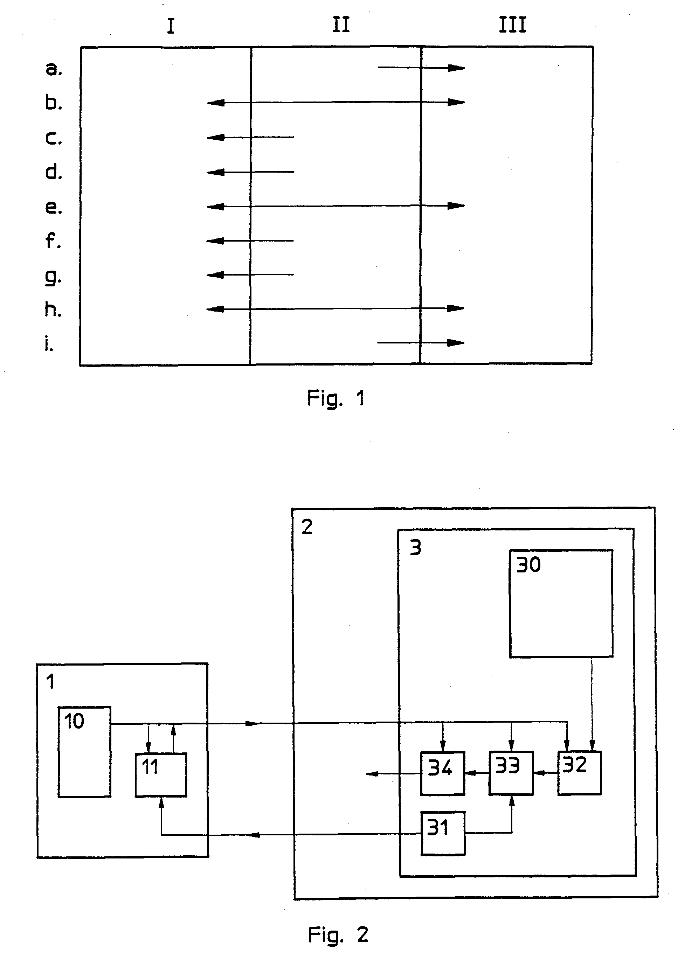

The procedure depicted schematically in Figure 1 comprises a possible data exchange according to the invention between a device (e.g. a telephone set or a vending machine) and a card. The particular device is provided with a secure module for storing data. The columns I, II, and III represent the card, the device and the secure module, respectively. From top to bottom, the successive times a to i inclusive are shown. At these points in time, the following take place, respectively:
a. The card has been inserted into the device. Thereupon, the device outputs a start instruction (start pulse) to the module.
b. Between the card and the module a verification procedure takes place via the device (check of the authenticity of the card). This procedure involves the transmission of, inter alia, usage data to the device. The module stores the current values (usage data) for this card.
c. During usage (telephone call, purchase transaction) a lowering of a card balance takes place (debit charges).
d. As for c.
e. The verification procedure is repeated for the purpose of checking whether (1) the card is still present; (2) the card present is authentic;
   [6] US-A-4.529.870
   [7] EP-A-0.223.213
   [8] P. Rémery, J.-C. Pailles, F. Laÿ: "Le paiement électronique", L'Echo des Recherches, No. 134, pp 15-24, 1988.
      (3) the card present is identical to the card present at time b. The module calculates the difference between the current value(s) and that (those) stored at b. and increments an internal counter. If one of the points (1) to (3) inclusive is not complied with, the transaction is discontinued.
f. As for c.
g. As for c.
h. As for e.
i. The transaction is completed, whereupon the device outputs a stop instruction (stop pulse) to the module. The latter may, if appropriate, update the stored data (counter contents).

It will be clear from the above that the reliability of the data stored in the module increases as the verification procedure is performed more frequently. Given the time required for the verification procedure, the verification procedure will in general, however, not take place after each lowering of a card balance (as for c., d., f. and g.). It should be noted that during the verification procedure, in addition to the usage data, other data, such as a card identification, are likewise transmitted from the card to the device. This will be further explained below.

The card 1 shown schematically in Figure 2 comprises a memory 10 for storing data, which include usage data (such as the card balance). The memory 10 may be constituted by e.g. a magnetic strip but is preferably a semiconductor memory. The device 2 depicted schematically is provided with a secure module 3 in which a storage unit (memory) 30 is disposed. Stored in the memory 10 there are, in addition to a card counter (count value), a card identification and a card key. The card key, the card counter and the card identification are fed to an encryptor 11 which is also fed, from the device 2, with a random number. From these data, the encryptor supplies an authenticity code which, like the card identification and the card counter, is transmitted to the device 2 and thence to the module 3. In the module 3, the card identification and a passkey (generic key) read out from the storage unit (memory) 30 are fed to a unit 32 which generates the card key therefrom.

This card key is fed, like the card identification, the card counter and the random number mentioned earlier, which was generated by random number generator 31, to an encryptor 33 which in a manner corresponding to that of the encryptor 11 of the card 1, generates an authenticity code. This code is, like the code generated by the encryptor 11, fed to a comparator 34. If the two authenticity codes, i.e. the code generated by the card 1, and the code regenerated by the module 3, agree, the card in question is adjudged to be authentic and a corresponding signal is output by the comparator 34 to the device 2, so that the transaction (use of the device with the aid of the card in question) may be continued.

The verification procedure described here and the components required therefor serve only as an example; it will be understood that implementation of the invention can also be achieved by an alternative verification procedure involving transmission of usage data from the card to the device.

The device 2 and the module 3 shown schematically in Figure 2, can be assembled from commercially available components. Techniques for implementing electronic circuits are described, inter alia, in "The Art of Electronics" [1]. Suitable cryptographic techniques may be found in "Cipher Systems" [2]. The card 1 may e.g. be a suitably programmed commercially available smart card. At least some of the electronic components of the module 3 and of the card 1 may advantageously be integrated in an application specific integrated circuit (ASIC).

It will further be understood that the device 2, in addition to the parts shown, comprises further parts (not shown) which provide for suitable functioning. Thus, the device 2 will comprise a card reader device which is preferably incorporated therein and into which the card 1 can be inserted and by means of which it is subsequently possible to communicate with the card. The device 2 is further provided with suitable means for performing a transaction, for example communication means for making a telephone call, dispensing means for dispensing a purchased product and the like. For the purpose of implementing the invention, a suitable device which is embodied by the device 2, is at least provided with means for storing usage data, means for transmitting usage data from the card to the device, and means for deriving from the transmitted usage data the data which have to be stored. This derivation may comprise both an arithmetic operation, for example addition or subtraction, and copying of the usage data or, on the basis of said usage data, incrementing or decrementing counter contents. Data stored in the storage unit may, for example, be read out via a cable link, but also by means of a suitable card which is provided with means for secure data storage. Security of this type is advantageously achieved by means of a security code for obtaining access to the memory of the card.

As has been explained above, the invention provides the possibility of storing, in the storage unit of the device, a counter value (balance value) which has been derived from a value which in turn has been transmitted, during a procedure for verifying the authenticity of the card, from said card to the device in question. This way it is assured that, at the same time as the authenticity check, the value stored in the storage unit (counter) is a correct representation of the value stored on the card. If the authenticity check is unsuccessful, in other words if the card is not adjudged authentic by the verification procedure, the counter value transmitted is not used. In essence, together with the authenticity check of the card an authenticity check of the counter data thus takes place. The authenticity check thereby acquires a supplementary function, without the verification procedure itself having to be extended for this purpose. The supplementary circuits required for implementing the method according to the invention, may therefore, apart from the storage elements (counters) required and the circuits for effecting the verification procedure, comprise only means for selectively passing the balance value(s) transmitted. An alternative possibility is, inter alia, that of resetting, in response to failure of the authentication, a relative counter, i.e. one which exclusively retains the last value read out. This, in principle, does not require supplementary circuits.

It will be understood by those skilled in the art that the invention is not limited to the illustrative embodiments depicted above and that many modifications and additions may be made without departing from the scope of the present invention, as defined in the appended claims.

## Claims

1. Method of securely recording cost data of a transaction of a card operated device, the device (2) comprising a device memory (30) for storing cost data, a card (1) comprising a card memory (10) for storing a card balance, the method comprising the steps of:
- at the beginning of a transaction, the card (1) transferring an initial card balance to the device (2), the device temporarily storing the initial balance,
- during the transaction, sending at least one debiting instruction from the device to the card (1), the card decrementing the card balance accordingly,
- at the end of the transaction, the card (1) transferring a final card balance to the device (2), the device determining the difference between the final balance and the initial balance and storing said difference in the device memory (30).

2. Method according to claim 1, wherein the step of transferring a card balance further comprises a verification of the authenticity of the card (1).

3. Method according to claim 1 or 2, wherein the card balances are transferred to the device (2) in a cryptographically protected form.

4. Method according to any of the preceding claims, wherein during the transaction the card (1) transfers at least one intermediate balance to the device, said intermediate balance being temporarily stored for use as final balance in case the transaction is prematurely terminated.

5. Method according to any of the preceding claims, wherein the device memory (30) is accomodated in a protected module (3) in the device (2).

6. Method according to any of the preceding claims, wherein the difference between the final balance and the initial balance is stored in the device memory (30) by incrementing a counter.

7. Method according to claim 6, wherein said counter is non-resettable.

8. Method according to claim 6 or 7, wherein said counter is periodically read out by an external apparatus.

9. Method according to claim 8, wherein the device memory (30) stores the value of said counter at the most recent reading out thereof.

## Patentansprüche

1. Verfahren zur sicheren Aufnahme von Kostendaten einer Transaktion einer kartenbetätigten Einrichtung, wobei die Einrichtung (2) einen Einrichtungsspeicher (30) zur Speicherung der Kostendaten umfasst, mit einer Karte (1), die ein Kartengedächtnis (10) zur Speicherung des Kartenguthabens aufweist, wobei das Verfahren die Verfahrensschritte umfasst:
- zu Beginn einer Transaktion, dass die Karte (1) der Einrichtung (2) einen anfänglichen Kartenguthabenswert übermittelt, wobei die Einrichtung die ursprüngliche Guthabenssumme speichert,
- während der Transaktion des Sendens von mindestens einer abziehenden Instruktion von der Einrichtung zu der Karte (1), wobei die Karte das Kartenguthaben entsprechend dekrementiert,
- am Ende der Transaktion, dass die Karte (1) der Einrichtung (2) ein Endkartenguthaben übermittelt, wobei die Einrichtung die Differenz zwischen dem Endkartenguthaben und dem anfänglichen Kartenguthaben bildet und diese Differenz in dem Einrichtungsspeicher (30) speichert.

2. Verfahren nach Anspruch 1, bei dem der Schritt der Übertragung eines Kartenguthabens weiterhin eine Überprüfung der Authentizität der Karte (1) umfasst.

3. Verfahren nach Anspruch 1 oder 2, bei dem Kartenguthaben in kryptographisch geschützter Form an die Einrichtung (2) übertragen werden.

4. Verfahren nach einem der vorstehenden Ansprüche, bei dem während der Transaktion die Karte (1) mindestens einen Zwischenguthabenwert an die Einrichtung überträgt, wobei dieses Zwischenguthaben temporär gespeichert wird, um als Endguthaben eingesetzt zu werden, falls die Transaktion vorzeitig abgebrochen wird.

5. Verfahren nach einem der vorstehenden Ansprüche, bei dem der Einrichtungsspeicher (30) in einem geschützten Modul (3) in der Einrichtung (2) vorgesehen ist.

6. Verfahren nach einem der vorstehenden Ansprüche, bei dem der Unterschied zwischen dem Endguthaben und dem anfänglichen Guthaben in dem Einrichtungsspeicher (30) gespeichert wird, indem ein Zähler hochgezählt wird.

7. Verfahren nach Anspruch 6, bei dem der Zähler nicht zurücksetzbar ist.

8. Verfahren nach Anspruch 6 oder 7, bei dem der Zähler periodisch von einer externen Apparatur ausgelesen wird.

9. Verfahren nach Anspruch 8, bei dem der Einrichtungsspeicher (30) den Wert des besagten Zählers von der jüngsten Auslesung speichert.

## Revendications

1. Méthode pour l'enregistrement de façon sûre de données de prix d'une transaction d'un dispositif actionné par carte, le dispositif (2) comprenant une mémoire de dispositif (30) pour stocker des données de prix, une carte (1) comprenant une mémoire de carte (10) pour stocker un solde de carte, la méthode comprenant les étapes qui consistent à :
- au début d'une transaction, transférer par la carte (1) un solde de carte initial jusqu'au dispositif (2), le dispositif stockant temporairement le solde initial,
- pendant la transaction, envoyer au moins une instruction de débit du dispositif à la carte (1), la carte faisant régresser le solde de carte en conséquence,
- à la fin de la transaction, transférer par la carte (1) un solde de carte final jusqu'au dispositif (2), le dispositif déterminant la différence entre le solde final et le solde initial et stockant ladite différence dans la mémoire de dispositif (30).

2. Méthode selon la revendication 1, dans laquelle l'étape de transfert d'un solde de carte consiste en outre en une vérification de l'authenticité de la carte (1).

3. Méthode selon la revendication 1 ou 2, dans laquelle les soldes de carte sont transférés jusqu'au dispositif (2) sous une forme protégée de façon cryptographique.

4. Méthode selon l'une quelconque des revendications précédentes, dans laquelle, pendant la transaction, la carte (1) transfère au moins un solde intermédiaire jusqu'au dispositif, ledit solde intermédiaire étant stocké temporairement pour servir de solde final dans le cas où la transaction est prématurément terminée.

5. Méthode selon l'une quelconque des revendications précédentes, dans laquelle la mémoire de dispositif (30) est logée dans un module protégé (3) dans le dispositif (2).

6. Méthode selon l'une quelconque des revendications précédentes, dans laquelle la différence entre le solde final et le solde initial est stockée dans la mémoire de dispositif (30) en faisant progresser un compteur.

7. Méthode selon la revendication 6, dans laquelle ledit compteur ne peut pas être remis à zéro.

8. Méthode selon la revendication 6 ou 7, dans laquelle ledit compteur est lu périodiquement par un appareil externe.

9. Méthode selon la revendication 8, dans laquelle la mémoire de dispositif (30) stocke la valeur dudit compteur à la lecture la plus récente de celui-ci.
